# EUROPEAN PATENT SPECIFICATION

(11) **EP 3 190 308 B1**
(45) Date of publication and mention of the grant of the patent: **02.01.2019**
(21) Application number: 15838060.0
(22) Date of filing: 03.07.2015
(51) Int. Cl.: F16F 9/05, B61F 5/10, F16F 9/32, F16F 9/04, F16F 9/58

(54) **AIR SPRING DEVICE**
LUFTFEDERVORRICHTUNG
DISPOSITIF DE RESSORT PNEUMATIQUE

(30) Priority: 05.09.2014 JP 2014181428
(43) Date of publication of application: 12.07.2017
(73) Proprietor: Bridgestone Corporation, Tokyo 104-8340 (JP)
(72) Inventor: KAWADA, Masayoshi, Tokyo 104-8340 (JP); TANAKA, Satoshi, Tokyo 104-8340 (JP)
(74) Representative: Oxley, Robin John George
(86) International application number: PCT/JP2015/069321
(87) International publication number: WO 2016/035438

(56) References cited:
- EP-A2- 2 280 186
- WO-A1-2007/090480
- DE-A1- 19 959 842
- JP-A- 2008 302 845
- JP-A- 2010 127 350
- US-A1- 2010 001 444
- US-A1- 2010 001 444
- US-A1- 2012 056 362

## Description

### Technical Field

The present invention relates to an air spring device employed in a railcar.

### Background Art

Japanese Patent Application Laid-Open (JP-A) No. 2013-130248 describes an air spring device that has a structure in which an upper face plate and a lower face plate are coupled together by a tube shaped flexible membrane body so as to be airtight. A slide plate made of polyacetal resin is provided to at least one facing face from out of respective facing faces of the upper face plate and the lower face plate, and the slide plate is capable of sliding horizontally while the upper face plate and the lower face plate are placed in face-to-face contact with each other. In this structure, displacement of the upper face plate in the horizontal direction with respect to the lower face plate is permitted, even in a state in which air is not being supplied to the air spring (a punctured state). Reference is also made to US 2012/056362, which discloses an air spring for a railway vehicle.

### SUMMARY OF INVENTION

### Technical Problem

When the air spring is in a punctured state, a state arises in which the upper face plate and the lower face plate contact each other. If a vehicle runs for a comparatively long distance in this state, depending on where this occurs, it is conceivable that the contacting faces of the upper face plate and the lower face plate might tilt with respect to the horizontal direction. If this tilt angle exceeds a friction angle, since the slide plate is flat, there is a concern that the upper face plate might slide far across the lower face plate, and that the function of supporting the upper face plate using the lower face plate might be impaired.

An object of exemplary embodiments of the present invention is to secure a function of supporting an upper face plate, while securing slide performance between the upper face plate and a lower face plate when an air spring device is tilted.

### Solution to Problem

An air spring device according to a first aspect of the present invention includes an upper face plate, a lower face plate that is disposed facing the upper face plate, and a flexible membrane body that is resiliently coupled to the upper face plate and the lower face plate and that forms a pressurized space between the upper face plate and the lower face plate. The upper face plate and the lower face plate respectively include planar face portions that face each other, the planar face portion of the upper face plate is formed with a larger surface area than the planar face portion of the lower face plate, and the upper face plate is provided with a limiting portion that is formed, with an outer side end edge of the planar face portion of the upper face plate as a starting end, so as to incline toward the lower face plate while extending away from a center side of the planar face portion of the upper face plate.

In this air spring device, when in a punctured state in which the pressurized space between the upper face plate and the lower face plate is not pressurized, a state arises in which the planar face portion of the upper face plate and the planar face portion of the lower face plate are in contact with each other. Since the planar face portion of the upper face plate has a larger surface area than the planar face portion of the lower face plate, the planar face portions can slide comparatively stably across each other when this occurs. Furthermore, even when contact faces (the planar face portions) between the upper face plate and the lower face plate are tilted with respect to the horizontal direction, a slide range of the lower face plate across the upper face plate is limited by the limiting portion provided to the upper face plate. This enables the function of supporting the upper face plate to be secured, while securing slide performance between the upper face plate and the lower face plate when the air spring device is tilted.

In the air spring device according to the first aspect, the limiting portion includes a first sloped face portion that is sloped with respect to the planar face portion of the upper face plate.

In this air spring device, the limiting portion includes the first sloped face portion that is sloped with respect to the planar face portion of the upper face plate, such that the shape of the limiting portion is simple and the limiting portion is easily shaped. This enables the one face plate to be realized at low cost.

Furthermore, in the air spring device according to the first aspect, the lower face plate includes a second sloped face portion that is formed, with an outer side end edge of the planar face portion of the lower face plate as a starting end, so as to incline away from the upper face plate while extending away from a center side of the planar face portion of the lower face plate.

In this air spring device, the lower face plate includes the second sloped face portion, thereby enabling interference between the upper face plate and the lower face plate to be suppressed, and enabling the slide range of the lower face plate with respect to the upper face plate to be widened.

A second aspect is the air spring device of the first aspect, wherein a slope angle of the first sloped face portion with respect to the planar face portion of the upper face plate is the same as a slope angle of the second sloped face portion with respect to the planar face portion of the lower face plate.

In this air spring device, the slope angle of the first sloped face portion is the same as the slope angle of the second sloped face portion, such that the first sloped face portion and the second sloped face portion are positioned parallel to each other when the planar face portion of the upper face plate and the planar face portion of the lower face plate are in contact with each other. Thus, when the lower face plate slides across the upper face plate and the second sloped face portion contacts the first sloped face portion, the contact surface area therebetween increases, thereby suppressing a rise in contact surface pressure. This enables a reduction in cost to be achieved by, for example, making the first sloped face portion and the second sloped face portion thinner.

A third aspect is the air spring device of the first aspect or the second aspect, wherein the planar face portion of the upper face plate, and a portion that is at least part of the limiting portion and that is continuous with the planar face portion of the upper face plate, are formed by a slide plate made of resin.

In this air spring device, the planar face portion of the upper face plate, and the portion that is at least part of the limiting portion and that is continuous with the planar face portion of the upper face plate, are formed by the slide plate made of resin, thereby enabling the lower face plate to be made to slide efficiently across the upper planar face portion to the limiting portion.

A fourth aspect is the air spring device of any of the first aspect to the third aspect, wherein the planar face portion of the lower face plate, and a portion that is at least part of the second sloped face portion and that is continuous with the planar face portion of the lower face plate, are formed by a slide plate made of resin.

In the lower face plate of this air spring device, the planar face portion of the lower face plate, and the portion that is at least part of the second sloped face portion and that is continuous with the planar face portion of the lower face plate, are formed by the slide plate made of resin, thereby enabling the lower face plate spanning from the planar face portion of the lower face plate to the second sloped face portion to be made to slide efficiently across the upper face plate. Moreover, the planar face portion of the lower face plate has a smaller surface area than the planar face portion of the upper face plate, such that the surface area of the slide plate is also smaller, which is beneficial in terms of cost.

### Advantageous Effects of Invention

The air spring device according to exemplary embodiments of the present invention obtains excellent advantageous effects of securing the function of supporting the upper face plate, while securing slide performance between the upper face plate and the lower face plate when the air spring device is tilted.

### BRIEF DESCRIPTION OF DRAWINGS

Fig. 1 is a cross-section illustrating an air spring device according to a first exemplary embodiment.
Fig. 2 is an enlarged cross-section illustrating an air spring device according to the first exemplary embodiment.
Fig. 3 is an enlarged cross-section illustrating a state in which a planar face portion of an upper face plate and a planar face portion of a lower face plate are in contact with each other in an air spring device according to the first exemplary embodiment.
Fig. 4 is a cross-section illustrating an air spring device according to a second exemplary embodiment.

### DESCRIPTION OF EMBODIMENTS

Explanation follows regarding exemplary embodiments of the present invention, based on the drawings.

### First Exemplary Embodiment

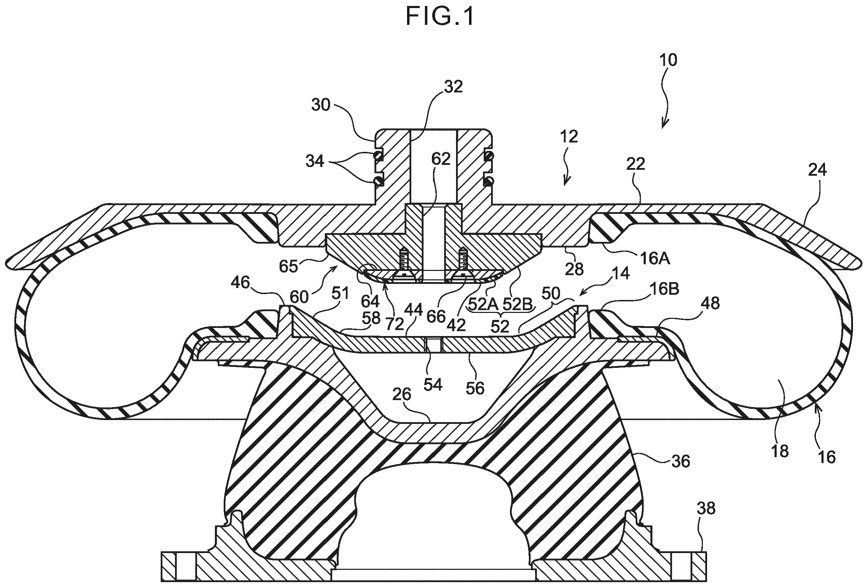

In Fig. 1, an air spring device 10 according to an exemplary embodiment includes an upper face plate 12, a lower face plate 14, and a flexible membrane body 16, and is installed and employed, for example, between a railcar body and a bogie (not illustrated in the drawings). The flexible membrane body 16 resiliently couples the upper face plate 12 and the lower face plate 14 together. A pressurized space 18 is formed between the upper face plate 12 and the lower face plate 14.

The upper face plate 12 is formed in a substantially circular disk shape, for example, and includes a straight portion 22 that is concentric to the center of the upper face plate 12, and a sloped portion 24 that extends sloping from a circumferential edge portion of the straight portion 22 toward the lower face plate 14 side. An upper face of the straight portion 22 is formed flat, for example. One end 16A of the flexible membrane body 16 contacts a lower face side of the upper face plate 12, spanning from an outer circumferential face of a thick portion 28 to the straight portion 22 and the sloped portion 24.

The thick portion 28 that projects out downward and a connecting portion 30 that projects out upward are formed in a center portion of the straight portion 22. A through-hole 32 that passes through the thick portion 28 and is in communication with the pressurized space 18 is formed in the connecting portion 30. O rings 34 are attached to an outer circumferential face of the connecting portion 30. The connecting portion 30 is connected to a pipe body or the like, not illustrated in the drawings. A planar face shaped attachment face (not illustrated in the drawings) is provided to a bottom face of the railcar body of the railcar. The upper face of the straight portion 22 of the upper face plate 12 abuts this attachment face.

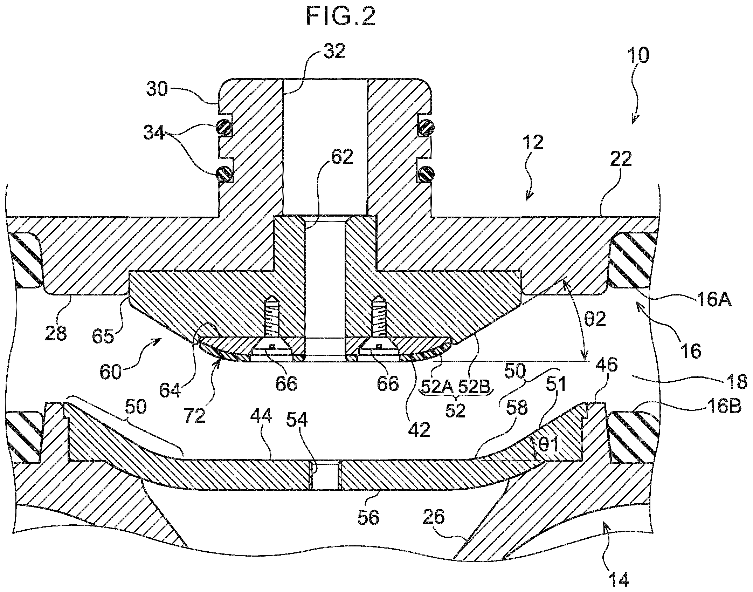

In Fig. 2, the lower face plate 14 is disposed facing the upper face plate 12. The lower face plate 14 is formed in a substantially circular disk shape, for example, and is a metal member formed with a center portion bulging downward. A recessed portion 26 is thereby formed on the upper face plate 12 side of the center portion of the lower face plate 14. A vertical wall portion 46 projects out in an annular shape, for example, from an upper face of the lower face plate 14, which is further to the outer side in the radial direction than the recessed portion 26. A protective member 48 is attached by being adhered, for example, to the outer circumference of the lower face plate 14 in order to protect the flexible membrane body 16. The protective member 48 is a resilient body, for example. Another end 16B of the flexible membrane body 16 contacts an upper face side of the lower face plate 14, spanning from an outer circumferential face of the vertical wall portion 46 to the protective member 48.

A resilient body 36 is provided below the lower face plate 14, and a support plate 38 is provided below the resilient body 36. In other words, the lower face plate 14 and the support plate 38 are vertically coupled together by the resilient body 36. The support plate 38 is fixed to the bogie of the railcar (not illustrated in the drawings), for example.

The upper face plate 12 and the lower face plate 14 include planar face portions 42, 44 that face each other. The planar face portions 42, 44 are each formed in a circular shape, for example. The planar face portion 44 of one face plate (hereafter simply referred to as the "lower face plate 14") is formed with a larger surface area than the planar face portion 42 of the other face plate (hereafter simply referred to as the "upper face plate 12"), from out of the upper face plate 12 or the lower face plate 14. Specifically, a circular disk shaped stopper 56 is attached inside the vertical wall portion 46 of the lower face plate 14 so as to straddle across the recessed portion 26. The planar face portion 44 is formed to an upper face of a center portion of the stopper 56. The recessed portion 26 is formed in the center portion of the lower face plate 14. The stopper 56 including the comparatively large planar face portion 44 is disposed straddling across the recessed portion 26, therefore enabling the space above the recessed portion 26 to be effectively utilized, which is beneficial in terms of efficient use of space.

In cases in which recessed portions or holes are present on the planar face portions 42, 44, the surface area thereof includes the opening area of the recessed portions or holes. Namely, the fact that the surface area of the planar face portion 44 is larger than the surface area of the planar face portion 42 means that the planar face portion 44 includes a range in which the planar face portion 42 is capable of sliding across the planar face portion 44.

A through-hole 54 is formed in a center portion of the planar face portion 44. As illustrated in the drawings, in cases in which the through-hole 54 is open, a space surrounded by the stopper 56 and the recessed portion 26 is also included in the pressurized space 18. Note that a female thread is formed in the through-hole 54, and that the through-hole 54 can be blocked by fastening a plug member (not illustrated in the drawings) formed with a male thread into the female thread. When the through-hole 54 is blocked, the space surrounded by the stopper 56 and the recessed portion 26 is no longer pressurized, and so the pressurized space 18 becomes smaller. Namely, the volume of the pressurized space 18 can be set to two configurations using the through-hole 54.

The lower face plate 14 is provided with a limiting portion 50, which is formed with an outer side end edge of the one planar face portion 44 (hereafter simply referred to as "planar face portion 44") as a starting end so as to approach the upper face plate 12 on progression away from the center side of the planar face portion 44. The limiting portion 50 includes a first sloped face portion 51 that is sloped with respect to the planar face portion 44.

The planar face portion 44 and the first sloped face portion 51 are preferably smoothly continuous with each other. A circular arc portion 58 is thereby formed between the planar face portion 44 and the first sloped face portion 51. The circular arc portion 58 is a circular arc that borders both the planar face portion 44 and the first sloped face portion 51 in a radial direction cross-section view of the stopper 56. The first sloped face portion 51 extends as far as the vicinity of an outer edge of the stopper 56. The first sloped face portion 51 is formed continuously around the circumferential direction of the stopper 56, and has a tapered face that increases in diameter on progression upward.

The upper face plate 12 includes a second sloped face portion 52, which is formed with an outer side end edge of the other planar face portion 42 (hereafter simply referred to as "planar face portion 42") as a starting end so as to extend away from the lower face plate 14 on progression away from the center side of the planar face portion 42. The planar face portion 42, and a portion 52A that is at least part of the second sloped face portion 52 and is continuous with the planar face portion 42, are formed by a slide plate 72 made of resin.

Specifically, an abutting member 60 made of metal, for example, is attached to a lower face side of the thick portion 28 of the upper face plate 12. The abutting member 60 is formed in a circular shape in a bottom face view, and a through-hole 62 that is in communication with the through-hole 32 is formed in the center of the abutting member 60. An external diameter of the abutting member 60 is smaller than an external diameter of the stopper 56. The planar face portion 42 and the second sloped face portion 52 are provided at a lower face side of the abutting member 60. The slide plate 72 is adhered to a circular disk shaped substrate 64, and is fastened and fixed to a base portion 65 of the abutting member 60 using screws 66. The second sloped face portion 52 is formed continuously around the circumferential direction of the base portion 65. A portion 52B of the second sloped face portion 52 that is directly formed to the base portion 65 has a tapered face which increases in diameter on progression upward.

It is desirable that the planar face portion 42 and the second sloped face portion 52 are smoothly connected together. The portion 52A of the second sloped face portion 52 that is formed by the slide plate 72 is thereby formed with a circular arc shaped cross-section, for example. The curvature of the portion 52A is the same as the curvature of the circular arc portion 58 of the lower face plate 14. Note that the portion 52A of the second sloped face portion 52 that is formed by the slide plate 72 may be formed by a combination of a circular arc and a straight line, or a combination of plural circular arcs, in a radial direction cross-section view.

It is desirable that a slope angle θ1 of the first sloped face portion 51 with respect to the planar face portion 44 is equal to a slope angle θ2 of the second sloped face portion 52 with respect to the planar face portion 42. In cases in which the slope angles θ1, θ2 are different from each other, θ2 > θ1 is desirable. This is so that the portion 52A of the second sloped face portion 52 formed by the slide plate 72 contacts the limiting portion 50 when the upper face plate 12 slides far across the lower face plate 14, and the upper face plate 12 returns more readily toward the center side of the lower face plate 14.

The following resins are employed, either individually or in combination as appropriate, as the resin configuring the slide plate 72.
- Prime Polymer Co. (Ltd.): HI-ZEX (registered trademark) 2100 J (polyethylene resin with a molecular weight of 100,000)
- Ticona: GUR (registered trademark) UHMW-PE 5113 (polyethylene resin with a molecular weight of 2,000,000)
- Ticona: Hostalloy (registered trademark) 731 (molecular weight of 230,000)
- Nippon Pillar Packing Co. (Ltd.): PILAFLON (registered trademark) G4 (polytetrafluoroethylene resin)
- Polyplastics Co., Ltd.: DURACON (registered trademark) POM

Note that a portion corresponding to the abutting member 60 may be integrally formed to the upper face plate 12. Alternatively, a portion of the abutting member 60 corresponding to the base portion 65 may be integrally formed to the upper face plate 12, and the slide plate 72 may be attached to this portion.

### Effects

Explanation follows regarding effects of the present exemplary embodiment configured as described above. The air spring device 10 according to the present exemplary embodiment is installed and employed between a railcar body and a bogie of a railcar (not illustrated in the drawings), for example. The railcar body can be supported on the bogie while shock is absorbed between the railcar body and the bogie by pressurizing the pressurized space 18 between the upper face plate 12 and the lower face plate 14.

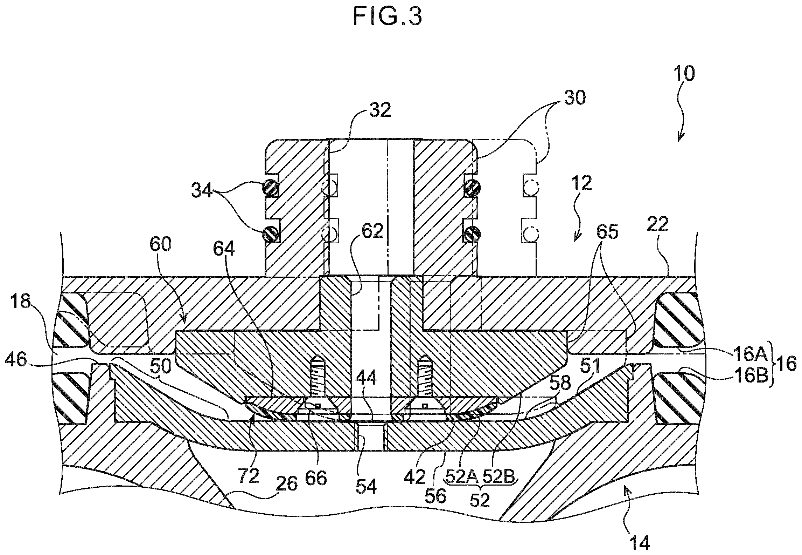

Fig. 3 illustrates a state in which the upper face plate 12 has lowered and the planar face portion 42 of the upper face plate 12 and the planar face portion 44 of the lower face plate 14 are in contact with each other due to the weight and so on of the railcar body in a punctured state when the pressurized space 18 is not pressurized between the upper face plate 12 and the lower face plate 14. The planar face portions 42, 44 can slide comparatively stably across each other when this occurs, since the planar face portion 44 of the lower face plate 14 has a larger surface area than the planar face portion 42 of the upper face plate 12. Forming each of the planar face portions 42, 44 in a circular shape enables uniform sliding in all directions in the horizontal direction to be permitted. Furthermore, even when contact faces (the planar face portions 42, 44) between the upper face plate 12 and the lower face plate 14 are tilted with respect to the horizontal direction, a slide range of the upper face plate 12 with respect to the lower face plate 14 is limited by the limiting portion 50 provided to the lower face plate 14.

In the present exemplary embodiment, the limiting portion 50 includes the first sloped face portion 51 that is sloped with respect to the planar face portion 44, such that the shape of the limiting portion 50 is simple, and the limiting portion 50 is easily shaped. This enables the lower face plate 14 to be realized at low cost. In the present exemplary embodiment, the upper face plate 12 includes the second sloped face portion 52, thereby enabling interference between the upper face plate 12 and the lower face plate 14 to be suppressed, and enabling the slide range of the upper face plate 12 across the lower face plate 14 to be widened.

In the upper face plate 12 of the present exemplary embodiment, the planar face portion 42, and the portion 52A, which is at least a part of the second sloped face portion 52 and is continuous with the planar face portion 42, are formed by the slide plate 72 made of resin, thereby enabling the upper face plate 12, from the planar face portion 42 to the second sloped face portion 52, to be made to slide efficiently across the lower face plate 14. Moreover, the planar face portion 42 has a smaller surface area than the planar face portion 44, and the external diameter of the abutting member 60 including the planar face portion 42 is smaller than the external diameter of the stopper 56 including the planar face portion 44, such that the surface area of the slide plate 72 is also smaller, which is beneficial in terms of cost.

The slope angle θ1 of the first sloped face portion 51 is the same as the slope angle θ2 of the second sloped face portion 52, such that the first sloped face portion 51 and the second sloped face portion 52 are positioned parallel to each other when the planar face portion 44 and the planar face portion 42 are in contact with each other. Thus, as illustrated by the double-dotted dashed lines in Fig. 3, when the upper face plate 12 slides across the lower face plate 14 and the second sloped face portion 52 contacts the first sloped face portion 51, the contact surface area therebetween increases, thereby suppressing a rise in contact surface pressure. This enables a reduction in cost to be achieved by making the first sloped face portion 51 and the second sloped face portion 52 thinner, and so on.

Thus, the present exemplary embodiment enables the function of supporting the upper face plate 12 to be secured, while securing slide performance between the upper face plate 12 and the lower face plate 14 when the air spring device 10 is tilted.

### Second Exemplary Embodiment

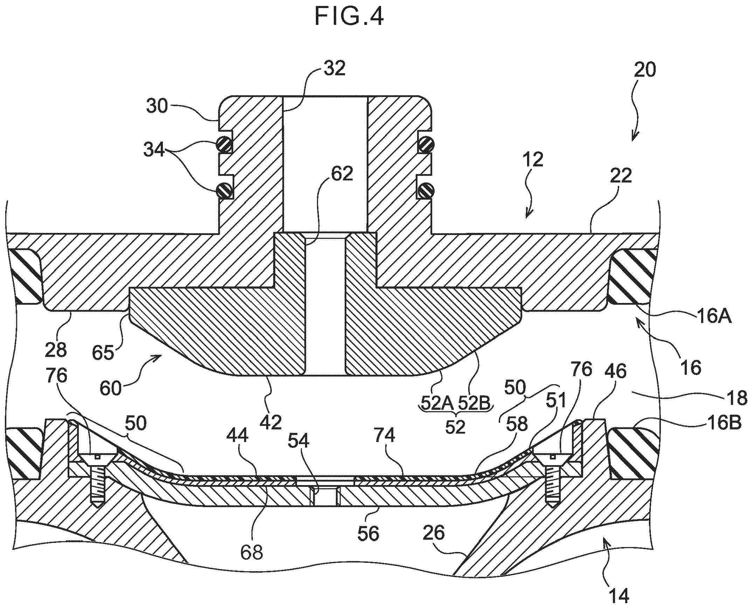

In an air spring device 20 according to an exemplary embodiment in Fig. 4, a planar face portion 44 of a lower face plate 14, and a portion (a circular arc portion 58) that is at least part of a limiting portion 50 and is continuous with the planar face portion 44, are formed by a slide plate 74 made of resin. In this illustrated example, both the planar face portion 44 and the limiting portion 50 are entirely formed by the slide plate 74. A planar face portion 42 and a second sloped face portion 52 of the upper face plate 12 are configured of metal. The slide plate 74 is adhered to a substrate 68, and is fastened and fixed to a stopper 56 using screws 76. A similar resin to that employed for the slide plate 72 of the first exemplary embodiment is employed as the resin configuring the slide plate 74.

Other portions are similar to those in the first exemplary embodiment, and so similar portions are appended with the same reference numerals in the drawings and explanation thereof is omitted.

### Effects

Explanation follows regarding effects of the present exemplary embodiment configured as described above. In the lower face plate 14 of the air spring device 20 according to the present exemplary embodiment in Fig. 4, the planar face portion 44, and the portion (circular arc portion 58) that is at least part of the limiting portion 50 and is continuous with the planar face portion 44, are formed by the slide plate 74 made of resin. This enables the upper face plate 12, from the planar face portion 44 to the limiting portion 50, to be made to slide efficiently.

### Other Exemplary Embodiments

Examples of exemplary embodiments of the present invention have been given above; however, exemplary embodiments of the present invention are not limited to those described above, and obviously various other modifications may be implemented within a range not departing from the spirit of the present invention.

For example, although the lower face plate 14 is the one face plate, and the upper face plate 12 is the other face plate, the vertical placement of the face plates may be reversed. In the first exemplary embodiment, the slide plate 72 is disposed on a part of the second sloped face portion 52; however, the slide plate 72 may be disposed over the entire second sloped face portion 52.

Although the limiting portion 50 is configured including the first sloped face portion 51, a limiting portion 50 may be configured by disposing plural circular arcs continuously to each over in a wave shape, for example, in a radial direction cross-section view of the lower face plate 14 (not illustrated in the drawings). Similarly, although the upper face plate 12 is configured including the second sloped face portion 52, plural circular arcs may be disposed continuously to each other instead, for example, in a radial direction cross-section view of the upper face plate 12 (not illustrated in the drawings). Configuration may also be such that only the planar face portion 42 is provided as a location of the upper face plate 12 that contacts the lower face plate 14.

The limiting portion 50 of the lower face plate 14 and the second sloped face portion 52 of the upper face plate 12 do not necessarily need to be formed in circular arc shapes, and may have directionality such that a slide range in a specific direction is limited.

As long as the slide performance of the upper face plate 12 and the lower face plate 14 can be secured, a configuration that does not employ the slide plates 72, 74 made of resin may be applied.

## Claims

1. An air spring device (10) for a railcar body, comprising:
an upper face plate (12);
a lower face plate (14) that is disposed facing the upper face plate (12); and
a flexible membrane body (16) that is resiliently coupled to the upper face plate (12) and the lower face plate (14) and that forms a pressurized space (18) between the upper face plate (12) and the lower face plate (14),
the upper face plate (12) and the lower face plate (14) respectively including planar face portions (42, 44) that face each other,
the planar face portion (42) of the upper face plate (12) being formed with a larger surface area than the planar face portion (44) of the lower face plate (14),
the upper face plate (12) being provided with a limiting portion (50) that is formed, with an outer side end edge of the planar face portion (42) of the upper face plate (12) as a starting end, so as to incline toward the lower face plate (14) while extending away from a center side of the planar face portion (42) of the upper face plate (12), **characterized by**,
a first sloped face portion (51) that is sloped with respect to the planar face portion (42) of the upper face plate (12),
the lower face plate (14) including a second sloped face portion (52) that is formed, with an outer side end edge of the planar face portion (44) of the lower face plate (14) as a starting end, so as to incline away from the upper face plate (12) while extending away from a center side of the planar face portion (44) of the lower face plate (14), and
a resilient body (36) and a support plate (38) that are provided below the lower face plate (14), the lower face plate (14) and the support plate (38) being vertically coupled together by the resilient body (36).

2. The air spring device (10) of claim 1, wherein a slope angle (θ1) of the first sloped face portion (51) with respect to the planar face portion (42) of the upper face plate (12) is the same as a slope angle (θ2) of the second sloped face portion (52) with respect to the planar face portion (44) of the lower face plate (14).

3. The air spring device (10) of claim 1 or claim 2, wherein the planar face portion (42) of the upper face plate (12), and a portion that is at least part of the limiting portion (50) and that is continuous with the planar face portion (42) of the upper face plate (12), are formed by a slide plate (72) made of resin.

4. The air spring device (10) of any one of claims 1 to 3, wherein the planar face portion (44) of the lower face plate (14), and a portion that is at least part of the second sloped face portion (52) and that is continuous with the planar face portion (44) of the lower face plate (14), are formed by a slide plate (74) made of resin.

## Patentansprüche

1. Luftfedervorrichtung (10) für einen Schienenwagenkörper, Folgendes beinhaltend:
eine obere Frontplatte (12);
eine untere Frontplatte (14), welche der oberen Frontplatte (12) zugewandt angeordnet ist; und
einen flexiblen Membrankörper (16), welcher elastisch an die obere Frontplatte (12) und die untere Frontplatte (14) gekoppelt ist und der einen mit Druck beaufschlagten Raum (18) zwischen der oberen Frontplatte (12) und der unteren Frontplatte (14) bildet,
wobei die obere Frontplatte (12) und die untere Frontplatte (14) jeweils planare Frontabschnitte (42, 44) beinhalten, die einander zugewandt sind,
wobei der planare Frontabschnitt (42) der oberen Frontplatte (12) mit einem größeren Flächenbereich gebildet ist als der planare Frontabschnitt (44) der unteren Frontplatte (14),
wobei die obere Frontplatte (12) mit einem Begrenzungsabschnitt (50) versehen ist, welcher mit einer äußeren Seitendenkante des planaren Frontabschnitts (42) der oberen Frontplatte (12) als einem Anfangspunkt gebildet ist, so dass er sich in Richtung der unteren Frontplatte (14) neigt, während er sich von einer Mittenseite des planaren Frontabschnitts (42) der oberen Frontplatte (12) weg erstreckt, **gekennzeichnet durch**:
einen ersten schrägen Abschnitt (51), welcher in Bezug auf den planaren Frontabschnitt (42) der oberen Frontplatte (12) schräg ist,
wobei die untere Frontplatte (14) einen zweiten schrägen Frontabschnitt (52) beinhaltet, welcher mit einer äußeren Seitendenkante des planaren Frontabschnitts (44) der unteren Frontplatte (14) als einem Anfangspunkt gebildet ist, so dass er sich von der oberen Frontplatte (12) weg neigt, während er sich von einer Mittenseite des planaren Frontabschnitts (44) der unteren Frontplatte (14) weg erstreckt, und
einen elastischen Körper (36) und eine Stützplatte (38), welche unterhalb der unteren Frontplatte (14) bereitgestellt sind, wobei die untere Frontplatte (14) und die Stützplatte (38) vertikal miteinander durch den elastischen Körper (36) gekoppelt sind.

2. Luftfedervorrichtung (10) nach Anspruch 1, bei welcher ein Neigungswinkel (θ1) der ersten schrägen Frontabschnitts (51) in Bezug auf den planaren Frontabschnitt (42) der oberen Frontplatte (12) derselbe ist wie ein Neigungswinkel (02) des zweiten schrägen Frontabschnitts (52) in Bezug auf den planaren Frontabschnitt (44) der unteren Frontplatte (14).

3. Luftfedervorrichtung (10) nach Anspruch 1 oder 2, bei welcher der planare Frontabschnitt (42) der oberen Frontplatte (12) und ein Abschnitt, welcher mindestens ein Teil des Begrenzungsabschnitts (50) ist und welcher kontinuierlich mit dem planaren Frontabschnitt (42) der oberen Frontplatte (12) ist, durch eine Gleitplatte (72) gebildet sind, die aus Harz besteht.

4. Luftfedervorrichtung (10) nach einem der Ansprüche 1 bis 3, bei welcher der planare Frontabschnitt (44) der unteren Frontplatte (14) und ein Abschnitt, welcher mindestens ein Teil des zweiten schrägen Frontabschnitts (52) ist und welcher kontinuierlich mit dem planaren Frontabschnitt (44) der unteren Frontplatte (14) ist, durch eine Gleitplatte (74) gebildet sind, die aus Harz besteht.

## Revendications

1. Dispositif de ressort pneumatique (10) pour une caisse de wagon, comprenant :
une plaque de face supérieure (12),
une plaque de face inférieure (14) disposée de manière à faire face à la plaque de face supérieure (12), et
un corps de membrane flexible (16) qui est couplé de façon élastique à la plaque de face supérieure (12) et à la plaque de face inférieure (14) et qui forme un espace pressurisé (18) entre la plaque de face supérieure (12) et la plaque de face inférieure (14),
la plaque de face supérieure (12) et la plaque de face inférieure (14) incluant respectivement des parties de face plane (42, 44) orientées l'une vers l'autre,
la partie de face plane (42) de la plaque de face supérieure (12) étant formée d'une surface plus grande que la partie de face plane (44) de la plaque de face inférieure (14),
la plaque de face supérieure (12) étant pourvue d'une partie délimitante (50) qui est formée par un bord terminal de côté extérieur de la partie de face plane (42) de la plaque de face supérieure (12), en tant que limite initiale, de manière à s'incliner vers la plaque de face inférieure (14) en s'éloignant d'un côté central de la partie de face plane (42) de la plaque de face supérieure (12), **caractérisé par** :
une première partie de face inclinée (51) qui est inclinée par rapport à la partie de face plane (42) de la plaque de face supérieure (12),
la plaque de face inférieure (14) incluant une seconde partie de face inclinée (52) qui est formée par un bord terminal de côté extérieur de la partie de face plane (44) de la plaque de face inférieure (14), en tant que limite initiale, de manière à s'incliner à l'écart de la plaque de face supérieure (12) en s'éloignant d'un côté central de la partie de face plane (44) de la plaque de face inférieure (14), et
un corps élastique (36) et une plaque de support (38) qui sont agencés en dessous de la plaque de face inférieure (14), la plaque de face inférieure (14) et la plaque de support (38) étant accouplées verticalement ensemble par le corps élastique (36).

2. Dispositif de ressort pneumatique (10) selon la revendication 1, dans lequel un angle d'inclinaison (θ1) de la première partie de face inclinée (51) par rapport à la partie de face plane (42) de la plaque de face supérieure (12) est le même qu'un angle d'inclinaison (02) de la seconde partie de face inclinée (52) par rapport à la partie de face plane (44) de la plaque de face inférieure (14).

3. Dispositif de ressort pneumatique (10) selon la revendication 1 ou 2, dans lequel la partie de face plane (42) de la plaque de face supérieure (12), et une partie constituant au moins une partie de la partie délimitante (50) qui est continue avec la partie de face plane (42) de la plaque de face supérieure (12) sont formées par une plaque de glissement (72) constituée de résine.

4. Dispositif de ressort pneumatique (10) selon l'une quelconque des revendications 1 à 3, dans lequel la partie de face plane (44) de la plaque de face inférieure (14), et une partie constituant au moins une partie de la seconde partie de face inclinée (52) qui est continue avec la partie de face plane (44) de la plaque de face inférieure (14) sont formées par une plaque de glissement (74) constituée de résine.
